# EUROPEAN PATENT SPECIFICATION

(11) **EP 1 484 676 B1**
(45) Date of publication and mention of the grant of the patent: **01.03.2006**
(21) Application number: 03012839.1
(22) Date of filing: 06.06.2003
(51) Int. Cl.: G06F 9/445, H04L 29/12

(54) **Configuring a computer in a network**
Konfiguration eines Computers in einem Netzwerk
Configuration d'un ordinateur dans un réseau

(43) Date of publication of application: 08.12.2004
(73) Proprietor: SAP AG, 69190 Walldorf (DE)
(72) Inventor: Dräger, Thorsten, 68809 Neulussheim (DE); Scheibli, Daniel, 76137 Karlsruhe (DE); Becker, Wolfgang, 67069 Ludwigshafen (DE)
(74) Representative: Cohausz & Florack

(56) References cited:
- WO-A-00/54149
- US-A1- 2003 005 096

## Description

### BACKGROUND

The invention relates to a method for automatically configuring a new computer within a computer network. The invention further relates to a computer system for automatically configuring a new computer within a computer network. The invention also refers to a computer program product for automatically configuring a new computer within a computer network.

In a computer environment with a plurality of computers, such as in blade server technology, it is necessary that the system administrator has knowledge about all installed computers and services or sets of services.

Server may stand for a computer (i.e. a processor with memory) that executes the service. A set of servers is made up of at least one computer, or server (with processor and memory).

The computers provide services to service customers. A service may stand for software that is part of a business application, for example, a database node, an application component, a J2EE engine, an Internet portal etc. A set of services may stand for at least one service. Conveniently, a set makes up an Enterprise Service Architecture (ESA).

To provide reliable services or sets of services, complex network architecture is necessary. The costs in such data centres are growing exponentially with complexity of the installation. New services and infrastructure, such as new computers, require manual labour and such are cost intensive. Also changes within the environment, as well as changing requirements of the services require manual labour.

To install new services or sets of services as well as increased requirements for existing services requires adding new servers, computers and services to a data centre. The installation causes many actions to be carried out and an unpredictable time is needed. In particular, in a computing on demand approach the computers and servers have to be installed quickly. The actions taken to provide a new computer within a computer network are mostly standardised. In a productive environment, which is a computer environment installed for a customer to provide a set of services, these tasks have to be carried out quickly, as down time is expensive. In today's environments, all tasks are done manually by the system administrators.

United States Patent Application US 2003/0005096 describes a method for automatically installing a new computer using remote boot servers on a network.

The Total Costs of Ownership (TCO) could be decreased by introducing methods for automatically installing new computers within a computer network. In case a large number of similar services and/or servers are present, it is an object of the invention to make it possible to bring up new servers without manual intervention. It is a further object of the invention to reduce the Total Cost of Ownership of computer networks. It is yet a further object of the invention to increase service level agreements within productive environments, such as maximum down time, maximum response time, maximum repair time and many others.

### SUMMARY

These and other objects of invention solved by a method for automatically configuring a new computer within a computer network according to claim 1.

As a first step, a temporary environment, such as a temporary operation system, which may be hardware independent, is loaded onto said new computer. This will be done automatically after the new computer is plugged and connected to the computer network and powered on.

Then the temporary environment provides methods which allocate a permanent identification for said new computer within said computer network. This permanent identification will be assigned to said new computer within said computer network using a unique identification of said new computer.

Each computer within a computer network has a unique identification. By assigning said permanent identification to said unique identification within said computer network, the new computer may be identified and addressed. Communication with said new computer may then be carried out using said permanent identification.

After the permanent identification is assigned to said unique identification, data may be transferred to said new computer from any other computer of the network. According to the invention, a permanent environment is loaded from said computer network to said new computer upon restart of said new computer using said permanent identification assigned to said unique identification.

That means that by allocating and assigning said permanent identification to said unique identification by said temporary environment, a permanent environment may be loaded upon restart of said new computer onto said new computer as the new computer may be addressed unambiguously. This permanent environment enables the new computer to carry out services within the computer network without manual interaction. The permanent environment may be an operating system being customized to enable the computer to carry out at least one service. The permanent environment is installed automatically, without human or manual intervention. The computer registers itself within said computer network automatically and is provided with its permanent operating system automatically.

New services may be provided by just plugging in a new computer, which may be a processor located on a single circuit board within a server rack, such as in blade server technology, at any time without human intervention. This reduces TCO. As new services might need new servers, these servers may be provided at demand. The new services may thus be provided by the new servers quickly and without much labour.

According to a preferred embodiment, a temporary identification for said new computer is requested. This temporary identification is requested prior to loading said temporary environment to said new computer. By requesting a temporary identification, said new computer may be identified within the computer network. The computer is addressed by said temporary identification.

Preferably, said temporary identification is requested from a host configuration server. This host configuration server may provide a dynamic host configuration protocol (DHCP).

Preferably, said temporary environment is loaded to said new computer using said temporary identification. By using an appropriate transport protocol, the temporary environment may be loaded onto the new computer using the temporary identification.

It is preferred that said temporary environment is loaded onto said new computer from a host configuration server. On said host configuration server said temporary environment may be stored. This temporary environment may run on any computer with low requirements on hardware capabilities of these computers. The host configuration server stores the temporary environment and provides it to each new computer, which is plugged into the computer network. The temporary environment may be a small generic operating system.

Preferably, said temporary environment identifies properties of said new computer. The properties of said new computer may be defined by the type of its CPU, memory, hard disc, network interface, periphery devices, and others. By identifying said properties of said new computer, its hardware is known to the temporary environment.

Knowing the properties, it is preferred that said temporary environment customizes entries of said permanent environment using said properties of said new computer, to create a customized permanent environment for said new computer prior to loading said permanent environment to said new computer. The customization may be carried out by adjusting a variable part of the permanent environment.

It is further preferred that said customization is at least partially carried out by modifying configuration files within said permanent environment said permanent environment therefore comprises a variable part. The variable part may be comprised of single files as well as file entries. These data may be changed by the temporary environment to customize the permanent environment for each new computer.

It is also preferred that said customization is at least partially carried out by modifying entries within a file system of said computer network. The temporary environment generates and/or modifies entries within configuration files of the permanent environment. The files may be stored within a network information system (NIS). By that, a variable part of the permanent environment is customized for fitting onto said new computer. Services running on the permanent environment may be configured to run on the new computer with its specific hardware configuration.

It is preferred, that said customized permanent environment is stored at least partially within a host configuration server and/or a network information server and/or a file system of said computer network. By that, said customized permanent environment is saved and may be provided to the new computer later on. This may be upon restart or reboot of said new computer. The customized environment may then be loaded onto said new computer. As this environment is customized according to the hardware specifications of said new computer, it fits well for the new computer and may run without any human interaction.

To make the new computer known within the computer network, said temporary environment allocates a hostname for said new computer within said computer network. This may be done within a host configuration server, such as a DHCP server. Hostname and permanent identification may be stored i.e. within the DHCP server within its DHCPD.conf files.

To allow finding said new computer, said temporary environment preferably registers said permanent identification and said hostname within a name resolution server.

Said new computer may comprise a pre-boot environment (PXE). This environment allows running said temporary environment on a computer. A pre-boot execution environment will often be provided by circuit boards being run as a computer/server within a server rack.

To allow the installation of many new computers, it is preferred that said temporary identification is released after said permanent identification is allocated and assigned within said host configuration server. The temporary identification is obsolete as the new computer may then be addressed using said permanent identification.

Said temporary identification and/or said permanent identification of said new computer are preferably an Internet Protocol Address (IP-Address). This allows addressing the new computer using a standard protocol.

To transmit said temporary environment and said permanent environment to said new computer it is preferred that transmission is carried out using a Transmission Control Protocol/Internet Protocol (TCP/IP) and/or a File Transfer Protocol (FTP). The file transfer may use a Trivial File Transfer Protocol (TFTP) which uses functionality of a User Datagram Protocol (UDP) or TCP. These Protocols use IP.

A unique identification of said new computer is preferably a Media Access Control (MAC) address of said new computer. The MAC-address is a hardware key that identifies a particular computer. This number is unique within computers of an organisation or a network. This number may be derived from hardware properties, such as a network interface card.

The objects of the invention are also solved by a computer system for automatically configuring a new computer within a computer network according to claim 16.

A further aspect of the invention is a computer program product for automatically configuring a new computer within a computer network according to claim 17.

Referring now to the drawings, in which like numerals represent like elements throughout the several figures, aspects of the present invention and the exemplary operating environment will be described.

### BRIEF DESCRIPTION OF THE DRAWINGS

In the figures show:
- Fig 1: a block diagram of a computer system;
- Fig. 2: a flow chart according to a method of the invention;
- Fig.3: a further flow chart according to a method of the invention;
- Fig. 4 a,b: a computer system according to the invention.

### DETAILED DESCRIPTION

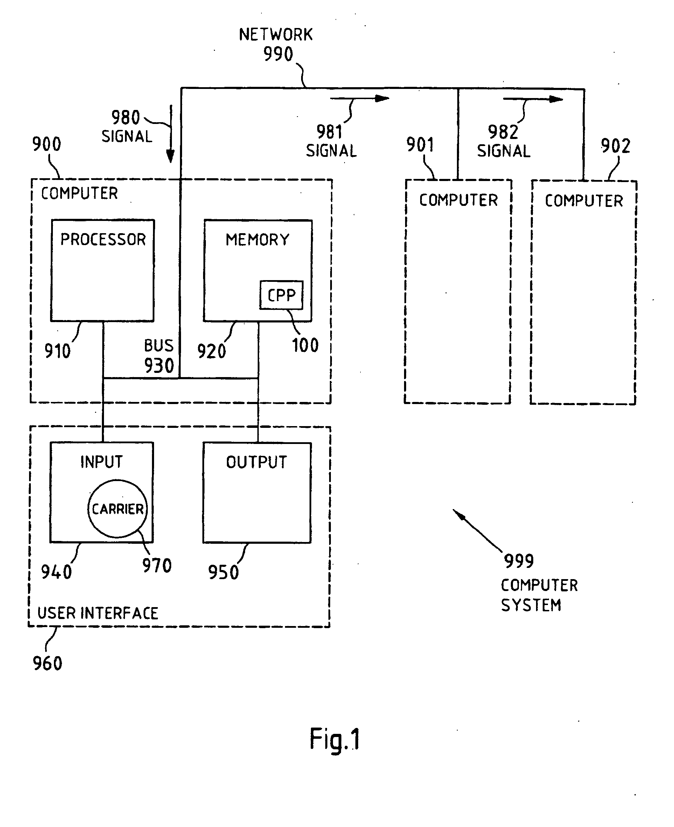

In FIGS. 1-4 reference numbers 100/200, 110/210 etc. denote similar elements, the function of these elements may be different.

Preferably, the present invention is implemented bby computers, within a computer network. An example is illustrated in connection with Fig. 1.

FIG. 1 illustrates a simplified block diagram of exemplary computer system 999 having a plurality of computers 900, 901, 902 (or even more).

Computer 900 can communicate with computers 901 and 902 over network 990. Computer 900 has processor 910, memory 920, bus 930, and, optionally, input device 940 and output device 950 (I/O devices, user interface 960). As illustrated, the invention is implemented by computer program product 100 (CPP), carrier 970 and signal 980.
In respect to computer 900, computer 901/902 is sometimes referred to as "remote computer", computer 901/902 is, for example, a server, a peer device or other common network node, and typically has many or all of the elements described relative to computer 900.

Computer 900 is, for example, a conventional personal computer (PC), a desktop device or a hand-held device, a multiprocessor computer, a pen computer, a microprocessor-based or programmable consumer electronics device, a minicomputer, a mainframe computer, a personal mobile computing device, a mobile phone, a portable or stationary personal computer, a palmtop computer or the like.

Processor 910 is, for example, a central processing unit (CPU), a micro-controller unit (MCU), digital signal processor (DSP), or the like.

Memory 920 is elements that temporarily or permanently store data and instructions. Although memory 920 is illustrated as part of computer 900, memory can also be implemented in network 990, in computers 901/902 and in processor 910 itself (e.g., cache, register), or elsewhere. Memory 920 can be a read only memory (ROM), a random access memory (RAM), or a memory with other access options. Memory 920 is physically implemented by computer-readable media, for example: (a) magnetic media, like a hard disk, a floppy disk, or other magnetic disk, a tape, a cassette tape; (b) optical media, like optical disk (CD-ROM, digital versatile disk - DVD); (c) semiconductor media, like DRAM, SRAM, EPROM, EEPROM, memory stick.

Optionally, memory 920 is distributed. Portions of memory 920 can be removable or non-removable. For reading from media and for writing in media, computer 900 uses well-known devices, for example, disk drives, or tape drives.

Memory 920 stores modules such as, for example, a basic input output system (BIOS), an operating system (OS), a program library, a compiler, an interpreter, and a text-processing tool. Modules are commercially available and can be installed on computer 900. For simplicity, these modules are not illustrated.

CPP 100 has program instructions and - optionally - data that cause processor 910 to execute method steps of the present invention. In other words, CPP 100 can control the operation of computer 900 and its interaction in network system 999 so that is operates to perform in accordance with the invention. For example and without the intention to be limiting, CPP 100 can be available as source code in any programming language and as object code ("binary code") in a compiled form.

Although CPP 100 is illustrated as being stored in memory 920, CPP 100 can be located elsewhere. CPP 100 can also be embodied in carrier 970.

Carrier 970 is illustrated outside computer 900. For communicating CPP 100 to computer 900, carrier 970 is conveniently inserted into input device 940. Carrier 970 is implemented as any computer readable medium, such as a medium largely explained above (cf. memory 920). Generally, carrier 970 is an article of manufacture having a computer readable medium with computer readable program code to cause the computer to perform methods of the present invention. Further, signal 980 can also embody computer program product 100.

Having described CPP 100, carrier 970, and signal 980 in connection with computer 900 is convenient. Optionally, further carriers and further signals embody computer program products (CPP) to be executed by further processors in computers 901 and 902.

Input device 940 provides data and instructions for processing by computer 900. Device 940 can be a keyboard, a pointing device (e.g., mouse, trackball, cursor, direction keys), microphone, joystick, game pad, scanner, or disc drive. Although the examples are devices with human interaction, device 940 can also be a device without human interaction, for example, a wireless receiver (e.g., with satellite dish or terrestrial antenna), a sensor (e.g., a thermometer), a counter (e.g., a goods counter in a factory). Input device 940 can serve to read carrier 970.

Output device 950 presents instructions and data that have been processed. For example, this can be a monitor or a display, (cathode ray tube (CRT), flat panel display, liquid crystal display (LCD), speaker, printer, plotter, vibration alert device. Output device 950 can communicate with the user, but it can also communicate with further computers.

Input device 940 and output device 950 can be combined to a single device. Any device 940 and 950 can be provided optional.

Bus 930 and network 990 provide logical and physical connections by conveying instruction and data signals. While connections inside computer 900 are conveniently referred to as "bus 930", connections between computers 900-902 are referred to as "network 990". Optionally, network 990 includes gateways which are computers that specialize in data transmission and protocol conversion.

Devices 940 and 950 are coupled to computer 900 by bus 930 (as illustrated) or by network 990 (optional). While the signals inside computer 900 are mostly electrical signals, the signals in network are electrical, electromagnetic, and optical or wireless (radio) signals.

Networks are commonplace in offices, enterprise-wide computer networks, intranets and the Internet (e.g., world wide web WWW). Network 990 can be a wired or a wireless network. To name a few network implementations, network 990 can be, for example, a local area network (LAN), a wide area network (WAN), a public switched telephone network (PSTN); a Integrated Services Digital Network (ISDN), an infra-red (IR) link, a radio link, like Universal Mobile Telecommunications System (UMTS), Global System for Mobile Communication (GSM), Code Division Multiple Access (CDMA), or satellite link.

A variety of transmission protocols, data formats and conventions is known, for example, as transmission control protocol/internet protocol (TCP/IP), hypertext transfer protocol (HTTP), secure HTTP, wireless application protocol (WAP), unique resource locator (URL), a unique resource identifier (URI), hypertext markup language (HTML), extensible markup language (XML), extensible hypertext markup language (XHTML), wireless markup language (WML), standard generalized markup language (SGML).

Interfaces coupled between the elements are also well known in the art. For simplicity, interfaces are not illustrated. An interface can be, for example, a serial port interface, a parallel port interface, a game port, a universal serial bus (USB) interface, an internal or external modem, a video adapter, or a sound card.

Computer and program are closely related. As used hereinafter, phrases, such as "the computer provides" and "the program provides", are convenient abbreviation to express actions by a computer that is controlled by a program.

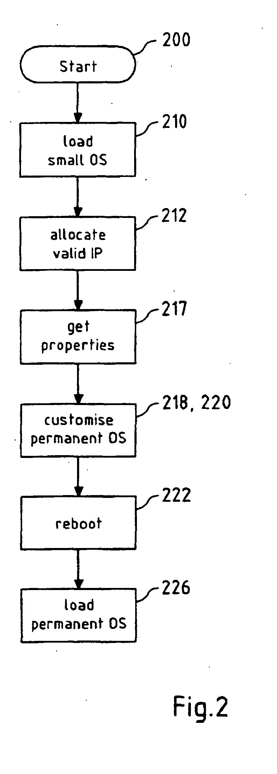

Fig. 2 depicts a flow chart of a method according to the invention. A new server/computer 400 within a computer network 490 is prepared to boot. Power and network cable are plugged. The server 400 has no operating system (OS) and must be configured to operate accordingly.

First of all, the new server 400 is switched on 200. In the next step 210, the new server 400 requests a temporary environment, e.g. a small generic OS. This small generic OS is loaded onto the computer 400, using a Pre-boot Executing Environment (PXE). The PXE is provided by a BIOS of the computer. The functionality of a PXE is supported by a network interface 431, in particular a Network Interface Card (NIC) of the computer 400. The computer 400 is connected to a network 490 providing a Dynamic Host Configuration Protocol (DHCP) server 401 and a network storage system 402, which provides a file system. The network 490 is monitored by a monitoring system showing a sys-admin all involved servers and services upon request.

After the small generic OS is loaded 210 onto the new server 400, this OS allocates a dedicated IP-Address and a hostname 212 on the DHCP-server 401. The DHCP-server 401 reserves the allocated IP-Address and hostname for this new computer exclusively. IP-Address and hostname are published to a name resolution server 403.

The small generic OS acquires 217 properties of the new server 400. These properties describe the hardware capabilities of the new server 400, such as memory 420, CPU 410, hard-disk, network interface 431, periphery, and further.

A dedicated OS is assigned to the new server. The dedicated OS may be used for multiple other servers. As it provides a variable part, which may be configured to specific hardware and service needs of new servers, it can be customized for each new server. The variable part is customized according to the capabilities of each new server. For each new server 400, several files in the variable part will be adapted 218, 220. After the variable part is customized 218, 220 for the new server 400, the new server 400 may be re-booted.

After reboot, the server 400 is assigned its dedicated IP-Address from the DHCP-server 401 and the customized dedicated OS is loaded via the network storage 402 to the new computer 226. After that, the new server 400 may fulfil all services which are provided by the dedicated OS. No manual action had happened.

The advantage of this method is that it configures the variable part, e.g. the necessary files, of an OS in real time. The reaction time on the needs for new serves is reduced, as no manual interaction is necessary.

The system administrator may react faster on application lacks concerning high work load peeks in unpredicted times as well as in down times of other servers. It minimises the time to deploy common server infrastructure and may increase parameters of service level agreements, such as possible work load, down time, reaction time and further.

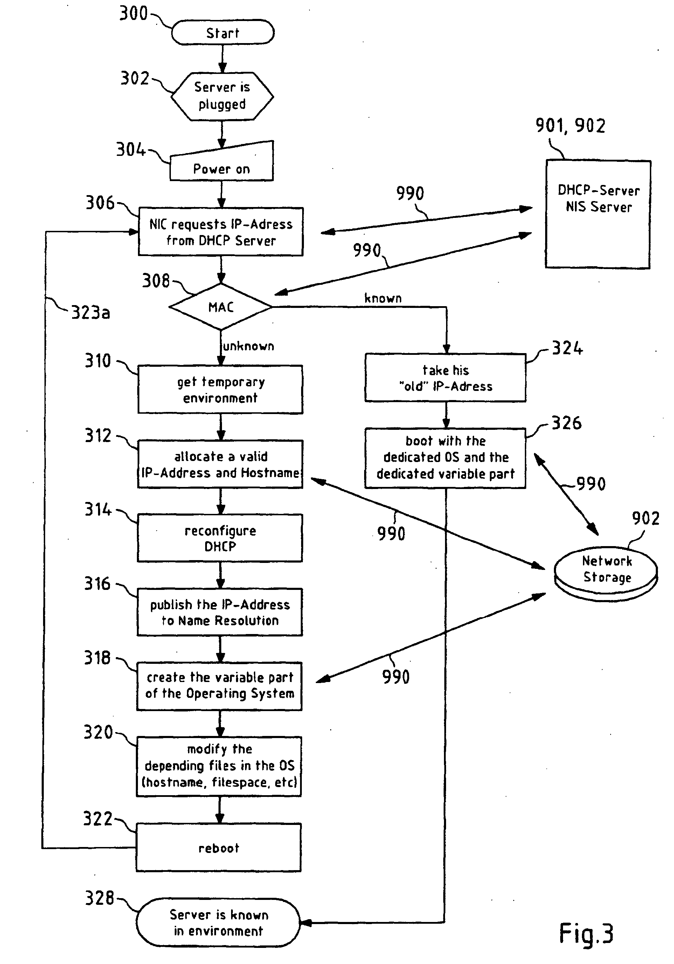

Fig. 3 depicts a more detailed flow chart of an inventive method. After a new server, e.g. a circuit board in a server rack for blade server technology, is requested 300, the server is plugged and powered on 302, 304. The Network Interface Card (NIC) 431 requests 306, via network 490 from DHCP server 401 a temporary IP-Address 306. The new computer 400 checks via network 490, whether a permanent OS has already been customized using its MAC address 308. The DHCP-server 401 does not know this MAC address upon first start of the new computer 400 and rejects this request.

In case the MAC address is unknown, the new computer 400 requests via its PXE a temporary OS 310. This temporary OS is provided from DHCP-server 401 or any other server 402, 403, 404 within computer network 490. The temporary OS allocates a valid IP-Address and a hostname within the DHCP-server 401, 312 for the new computer. After a valid IP-Address and a hostname have been allocated, the DHCP-server 401, in particular the DHCP.conf file is reconfigured 314 accordingly. The IP-Address and hostname are published to a name resolution server 316.

The temporary OS acquires the hardware properties of the new server 400. It determines the hardware facilities of the new computer 400. After that the temporary OS configures a variable part of a permanent OS. The permanent OS is stored in network storage 402. It may be configured via computer network 490 in step 318. The corresponding files in the permanent OS, e.g. hostname, filespace and further, are modified and stored within network storage 402 in step 320.

After that, the permanent OS may be fully configured and loaded onto the new computer to be run as a full service computer.

To do that, the new computer 400 is re-booted 322. After re-boot 323a, the new computer 400 again requests an IP-Address from the DHCP-server 306, and thus transmits its MAC address to the DHCP-server 401. The DHCP-server 401 now knows the new computer 400, as in step 314 the MAC address has already been assigned to a valid IP-address. As the MAC address is known 308, the permanent IP-Address allocated in step 312 is assigned to the new computer 324. The temporary IP-address is released.

By using the valid IP-Address, the permanent OS is loaded via computer network 490 from network storage 402 to the new computer 400 using a file transfer protocol 326, i.e. a Trivial File Transfer Protocol (TFTP). After the permanent OS with its variable part has been loaded onto the new computer 400, this computer 400 may act as a server within the computer network and is known within the network 328.

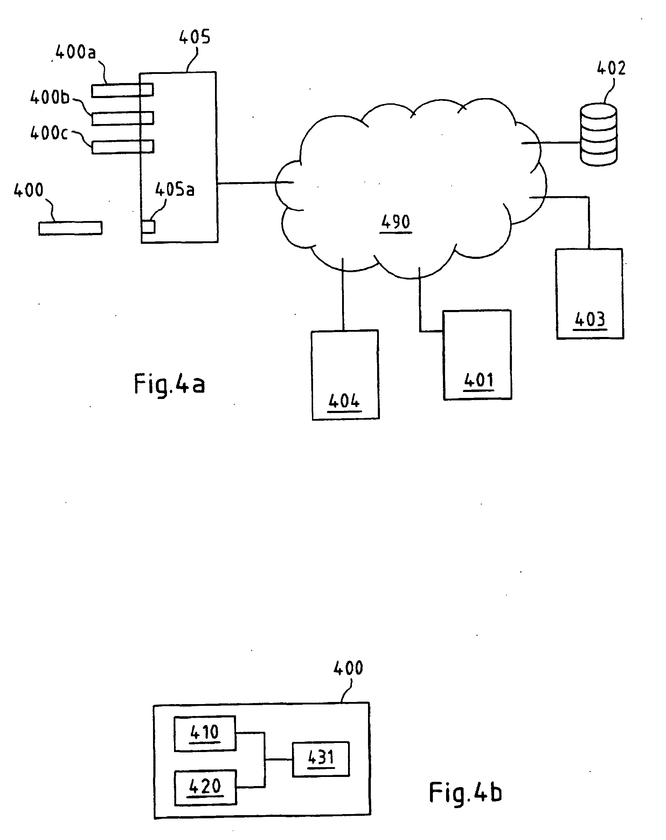

Figure 4a depicts a computer system according to the invention. A server rack 405 is provided. This server rack 405 comprises interfaces 405a to which a plurality of computers 400a, 400b, 400c are plugged. A new computer 400 may be plugged into a free interface 405a upon request. The server rack is connected to a computer network 490, connecting all computers 400, 400a, 400b, and 400c to the network 490. The computer network 490 comprises a DHCP server 401, a network file system 402, a network information server (NIS) 403, and a name resolution server (404). To install the new computer 400 within the computer network 490, methods according to figures 2, and 3 are applied.

Figure 4b depicts a new computer 400. This new computer 400 comprises a CPU 410. This CPU allows running a permanent environment and extracting properties of the computer 400. A memory 420 is provided, which allows storing a permanent, as well as, a temporary environment and a computer program product. The computer 400 also comprises a network interface card 431, connecting the new computer 400 via interface 405a to computer network 490.

A BIOS of the computer provides a pre-boot environment (PXE). The PXE functionality is supported by the NIC 431. The NIC 431 may request a temporary and permanent identification from DHCP server 401. It also allows loading a temporary environment, as well as, a permanent environment, or parts thereof, via computer network 490 from DHCP server 401, network storage 402, NIS server 403, or name resolution server 404. The NIC 431 also provides a MAC address. This MAC address may be assigned to a permanent IP address within DHCP server 401. A hostname and an IP address may be stored within name resolution server 404.

The method and system enable customers to easily add new hardware into the data centre. The time for deployment is minimised. In network environments with a lot of identical or similar servers, which only vary little, the automated deployment is very useful. Having multiple services, starting on demand on multiple servers, the method is very helpful and time saving to deploy new servers. Further, the system administrator knows about all installed servers, as new servers are registered within the DHCP-server and the name resolution server upon start.

### REFERENCE NUMBERS

- 900: computer
- 910: processor
- 920: memory
- 930: bus
- 940: input device
- 950: output device
- 960: user interface
- 970: program carrier
- 980: program signal
- 999: computer network system

- 200: start
- 210: load small OS
- 212: allocate IP
- 217: get properties .
- 218: create variable part
- 220: modify variable part
- 222: reboot
- 226: load permanent OS

- 300: start
- 302: server plugged
- 304: Power on
- 306: NIC request
- 308: MAC check
- 310: request OS
- 312: allocate IP
- 314: configure DHCP
- 316: publish IP
- 318: configure OS
- 320: configure variable part
- 322: reboot
- 323a: restart

- 324: assign valid IP
- 326: load permanent OS
- 328: server known in network

- 400: new computer
- 400a-c: blade server
- 401: DHCP server
- 402: network storage
- 403: NIS server
- 404: name resolution server
- 405: server rack
- 405a: interface
- 410: CPU
- 420: Memory
- 431: NIC

## Claims

1. Method for automatically configuring a new computer within a computer network with the steps of:
- starting a pre-boot executing environment within the new computer,
- requesting a temporary identification for said new computer by said pre-boot execution environment
- loading a temporary operating system from a network storage to said new computer (310) using said temporary identification,
- allocating within said computer network a permanent identification for said new computer (312) using said temporary operating system,
- assigning within said computer network said permanent identification to said new computer with a unique identification of said new computer (314) using said temporary operating system,
**characterized by**
- restarting said new computer, and
- loading a permanent operating system from said network storage to said new computer after restart of said new computer using said permanent identification (326).

2. A method of claim 1, wherein said temporary identification is requested from a host configuration server.

3. A method of claim 2, wherein said temporary operating system is loaded to said new computer from a host configuration server.

4. A method of claim 2 or 3, wherein said temporary operating system identifies properties of said new computer (217).

5. A method of claim 4, wherein said temporary operating system customizes entries of said permanent operating system using said properties of said new computer to create a customized permanent operating system for said new computer (218, 220, 318, 320).

6. A method of claim 5, wherein said customization is at least partially carried out by modifying configuration files within said permanent operating system (218, 220, 318, 320).

7. A method of claim 5 or 6, wherein said customization is at least partially carried out by modifying entries within a file system of said computer network (218, 220, 318, 320).

8. A method of any one of claims 5 to 7, wherein said customized permanent operating system is stored at least partially within said host configuration server and/or a network information server and/or a file system of said computer network.

9. A method of any one of claims 1 to 8, wherein said temporary operating system allocates a hostname for said new computer within said computer network (312).

10. A method of claim 9, wherein said temporary operating system allocates said hostname within a host configuration server.

11. A method of any one of claims 1 to 10, wherein said temporary operating system registers said permanent identification and said hostname within a name resolution server.

12. A method of any one of claims 2 to 11, wherein said temporary identification is released after said permanent identification is allocated and assigned within said host configuration server.

13. A method of any one of claims 2 to 12, wherein said temporary identification and/or said permanent identification of said new computer is an Internet Protocol address.

14. A method of any one of claims 1 to 13, wherein said temporary operating system and/or said permanent operating system are transmitted to said new computer using a File Transfer Protocol, a Trivial File Transfer Protocol, or a Network File System running on a Transmission Control Protocol/Internet Protocol.

15. A method of any one of claims 1 to 14, wherein said unique identification of said new computer is established from a media access control address of said new computer.

16. Computer network comprising a plurality of computers (401, 402, 403, 404,) for automatically configuring a new computer (400) within said computer network (490),
- said computer network (490) comprising a network storage (402) for providing a temporary operating system to said new computer (400), a host configuration server (401) for providing temporary identifications and permanent identifications for computers within said computer network (490) and for assigning said permanent identifications to said computers using unique identifiers of said computers,
- said new computer (400) comprises means (431) for executing a pre-boot execution environment, requesting a temporary identification for said new computer, loading a temporary operating system from said network storage using said temporary identification, and executing said temporary operating system such that said temporary operating system
- allocates within said host configuration server (401) a permanent identification for said new computer (400), and
- assigns within said host configuration server (401) (490) said permanent identification to said new computer (400) using a unique identification of said new computer (400), whereby
- said new computer (400) further comprises storage means (420) for storing a permanent operating system loaded from said network storage (402) to said new computer (400) after restarting said new computer (400) using said permanent identification.

17. Computer program product for automatically configuring a new computer (400) within a computer network (490), the product comprising
- a pre-boot executing environment module that when executed within the new computer,
- requests a temporary identification for said new computer and
- loads a temporary operating system from a network storage to said new computer (310) using said temporary identification, a temporary operating system module that, when executed on the new computer
- allocates within said computer network a permanent identification for said new computer (312) and
- assigns within said computer network said permanent identification to said new computer with a unique identification of said new computer (314)
- and a module that
- loads a permanent operating system from said network storage to said new computer after restart of said new computer using said permanent identification (326).

## Patentansprüche

1. Verfahren zum automatischen Konfigurieren eines neuen Computers innerhalb eines Computernetzwerkes mit den folgenden Schritten:
- Starten einer Preboot-Ausführungsumgebung in dem neuen Computer,
- Anfordern einer temporären Identifikation für den genannten neuen Computer durch die genannte Preboot-Ausführungsumgebung,
- Laden eines temporären Betriebssystems aus einem Netzwerkspeicher auf den genannten neuen Computer (310) unter Verwendung der genannten temporären Identifikation,
- Zuordnen einer permanenten Identifikation für den genannten Computer (312) innerhalb des genannten Computernetzwerkes mit dem genannten temporären Betriebssystem,
- Zuweisen der genannten permanenten Identifikation zu dem genannten neuen Computer innerhalb des genannten Computernetzwerkes mit einer eindeutigen Identifikation des genannten neuen Computers (314) unter Verwendung dem genannten temporären Betriebssystem,
**gekennzeichnet durch**
- Neustarten des genannten neuen Computers, und
- Laden eines permanenten Betriebssystems aus dem genannten Netzwerkspeicher auf den genannten neuen Computer nach dem Neustarten des genannten neuen Computers unter Verwendung der genannten permanenten Identifikation (326).

2. Verfahren nach Anspruch 1, wobei die genannte temporäre Identifikation von einem Host-Konfigurationsserver angefordert wird.

3. Verfahren nach Anspruch 2, bei dem das genannte temporäre Betriebssystem von einem Host-Konfigurationsserver auf den genannten neuen Computer geladen wird.

4. Verfahren nach Anspruch 2 oder 3, bei dem das genannte temporäre Betriebssystem Eigenschaften des genannten neuen Computers (217) identifiziert.

5. Verfahren nach Anspruch 4, bei dem das genannte temporäre Betriebssystem Einträge des genannten permanenten Betriebssystems anhand der genannten Eigenschaften des genannten neuen Computers anpasst, um ein kundenspezifisches permanentes Betriebssystem für den genannten neuen Computer (218, 220, 318, 320) zu erzeugen.

6. Verfahren nach Anspruch 5, bei dem die genannte Anpassung wenigstens teilweise durch Modifizieren von Konfigurationsdateien innerhalb des genannten permanenten Betriebssystems (218, 220, 318, 320) durchgeführt wird.

7. Verfahren nach Anspruch 5 oder 6, bei dem die genannte Anpassung wenigstens teilweise durch Modifizieren von Einträgen in einem Dateisystem des genannten Computernetzwerkes (218, 220, 318, 320) durchgeführt wird.

8. Verfahren nach einem der Ansprüche 5 bis 7, wobei das genannte angepasste permanente Betriebssystem wenigstens teilweise in dem genannten Host-Konfigurationsserver und/oder einem Netzwerkinformationsserver und/oder einem Dateisystem des genannten Computernetzwerkes gespeichert wird.

9. Verfahren nach einem der Ansprüche 1 bis 8, bei dem das genannte temporäre Betriebssystem einen Hostnamen für den genannten neuen Computer innerhalb des genannten Computernetzwerkes (312) zuordnet.

10. Verfahren nach Anspruch 9, bei dem das genannte temporäre Betriebssystem den genannten Hostnamen innerhalb eines Host-Konfigurationsservers zuordnet.

11. Verfahren nach einem der Ansprüche 1 bis 10, bei dem das genannte temporäre Betriebssystem die genannte permanente Identifikation und den genannten Hostnamen in einem Namenauflösungsserver registriert.

12. Verfahren nach einem der Ansprüche 2 bis 11, bei dem die genannte temporäre Identifikation nach dem Zuordnen der genannten permanenten Identifikation und ihrer Zuweisung innerhalb des genannten Host-Konfigurationsservers aufgelöst wird.

13. Verfahren nach einem der Ansprüche 2 bis 12, bei dem die genannte temporäre Identifikation und/oder die genannte permanente Identifikation des genannten neuen Computers eine Internet Protocol Adresse ist.

14. Verfahren nach einem der Ansprüche 1 bis 13, bei dem das genannte temporäre Betriebssystem und/oder das genannte permanente Betriebssystem mit einem auf einem Transmission Control Protocol/Internet Protocol File Transfer Protocol, einem Trivial File Transfer Protocol oder einem Network File System zu dem genannten neuen Computer übertragen wird.

15. Verfahren nach einem der Ansprüche 1 bis 14, bei dem die genannte eindeutige Identifikation des genannten neuen Computers von einer Media-Access-Steueradresse des genannten neuen Computers erstellt wird.

16. Computernetzwerk, das eine Mehrzahl von Computern (401, 402, 403, 404) zum automatischen Konfigurieren eines neuen Computers (400) innerhalb des genannten Computernetzwerkes (490) umfasst,
- wobei das genannte Computernetzwerk (490) einen Netzwerkspeicher (402) zum Bereitstellen eines temporären Betriebssystems zu dem genannten neuen Computer (400), einen Host-Konfigurationsserver (401) zum Bereitstellen von temporären Identifikationen und permanenten Identifikationen für Computer innerhalb des genannten Computernetzwerkes (490) und zum Zuweisen der genannten permanenten Identifikationen zu den genannten Computern anhand von eindeutigen Kennungen der genannten Computer umfasst,
- wobei der genannte neue Computer (400) Mittel (431) zum Ausführen einer Preboot-Ausführungsumgebung, zum Anfordern einer temporären Identifikation für den genannten neuen Computer, zum Laden eines temporären Betriebssystems aus dem genannten Netzwerkspeicher anhand der genannten temporären Identifikation und zum Ausführen des genannten temporären Betriebssystems umfasst, so dass das genannte temporäre Betriebssystem:
- innerhalb des genannten Host-Konfigurationsservers (401) eine permanente Identifikation für den genannten neuen Computer (400) zuordnet, und
- dem genannten neuen Computer (400) die genannte permanente Identifikation innerhalb des genannten Host-Konfigurationsservers (401) (490) mit einer eindeutigen Identifikation des genannten neuen Computers (400) zuweist, wobei
- der genannte neue Computer (400) ferner Speichermittel (420) zum Speichern eines nach dem Neustarten des genannten Computers (400) mit der genannten permanenten Identifikation aus dem genannten Netzwerkspeicher (402) auf den genannten neuen Computer (400) geladenen permanenten Betriebssystems umfasst.

17. Computerprogrammprodukt zum automatischen Konfigurieren eines neuen Computers (400) innerhalb eines Computernetzwerkes (490), wobei das Produkt Folgendes umfasst:
- ein Preboot-Ausführungsumgebungsmodul, das beim Ablaufen innerhalb des neuen Computers:
- eine temporäre Identifikation für den genannten neuen Computer anfordert und
- ein temporäres Betriebssystem aus einem Netzwerkspeicher auf den genannten neuen Computer (310) unter Verwendung der genannten temporären Identifikation lädt
- ein temporäres Betriebssystemmodul, das beim Ablaufen auf dem neuen Computer innerhalb des genannten Computernetzwerkes eine permanente Identifikation für den genannten neuen Computer (312) zuordnet, und
- dem genannten neuen Computer die genannte permanente Identifikation innerhalb des genannten Computernetzwerkes mit einer eindeutigen Identifikation des genannten neuen Computers (314) zuweist,
- und ein Modul, das
- nach dem Neustarten des genannten neuen Computers ein permanentes Betriebssystem aus dem genannten Netzwerkspeicher auf den genannten neuen Computer mit der genannten permanenten Identifikation (326) lädt.

## Revendications

1. Procédé pour configurer automatiquement un nouvel ordinateur à l'intérieur d'un réseau d'ordinateurs comprenant les étapes consistant à :
- démarrer un environnement d'exécution préalable au démarrage à l'intérieur du nouvel ordinateur,
- demander une identification provisoire dudit nouvel ordinateur par ledit environnement d'exécution préalable au démarrage,
- charger un système d'exploitation provisoire à partir d'un stockage en réseau vers ledit nouvel ordinateur (310) en utilisant ladite identification provisoire,
- affecter à l'intérieur dudit réseau d'ordinateurs une identification permanente dudit nouvel ordinateur (312) en utilisant ledit système d'exploitation provisoire,
- affecter à l'intérieur dudit réseau d'ordinateurs ladite identification permanente audit nouvel ordinateur avec une identification unique dudit nouvel ordinateur (314) en utilisant ledit système d'exploitation provisoire,
**caractérisé par**
- le redémarrage dudit nouvel ordinateur, et
- le chargement d'un système d'exploitation permanent à partir dudit stockage en réseau vers ledit nouvel ordinateur après le redémarrage dudit nouvel ordinateur en utilisant ladite identification permanente (326).

2. Procédé selon la revendication 1, dans lequel ladite identification provisoire est demandée à partir d'un serveur de configuration hôte.

3. Procédé selon la revendication 2, dans lequel ledit système d'exploitation provisoire est chargé vers ledit nouvel ordinateur à partir d'un serveur de configuration hôte.

4. Procédé selon l'une quelconque des revendications 2 ou 3, dans lequel ledit système d'exploitation provisoire identifie les propriétés dudit nouvel ordinateur (217).

5. Procédé selon la revendication 4, dans lequel ledit système d'exploitation provisoire personnalise des entrées dudit système d'exploitation permanent en utilisant lesdites propriétés dudit nouvel ordinateur pour créer un système d'exploitation permanent personnalisé dudit nouvel ordinateur (218, 220, 318, 320).

6. Procédé selon la revendication 5, dans lequel ladite personnalisation est exécutée au moins partiellement en modifiant des fichiers de configuration à l'intérieur dudit système d'exploitation permanent (218, 220, 318, 320).

7. Procédé selon l'une quelconque des revendications 5 ou 6, dans lequel ladite personnalisation est exécutée au moins partiellement en modifiant des entrées à l'intérieur d'un système de fichiers dudit réseau d'ordinateurs (218, 220, 318, 320).

8. Procédé selon l'une quelconque des revendications 5 à 7, dans lequel ledit système d'exploitation permanent personnalisé est stocké au moins partiellement à l'intérieur dudit serveur de configuration hôte et / ou d'un serveur d'informations en réseau et / ou d'un système de fichiers dudit réseau d'ordinateurs.

9. Procédé selon l'une quelconque des revendications 1 à 8, dans lequel ledit système d'exploitation provisoire affecte un nom d'hôte audit nouvel ordinateur à l'intérieur dudit réseau d'ordinateurs (312).

10. Procédé selon la revendication 9, dans lequel ledit système d'exploitation provisoire affecte ledit nom d'hôte à l'intérieur d'un serveur de configuration hôte.

11. Procédé selon l'une quelconque des revendications 1 à 10, dans lequel ledit système d'exploitation provisoire enregistre ladite identification permanente et ledit nom d'hôte à l'intérieur d'un serveur de résolution de nom.

12. Procédé selon l'une quelconque des revendications 2 à 11, dans lequel ladite identification provisoire est libérée une fois que ladite identification permanente a été affectée à l'intérieur dudit serveur de configuration hôte.

13. Procédé selon l'une quelconque des revendications 2 à 12, dans lequel ladite identification provisoire et / ou ladite identification permanente dudit nouvel ordinateur est une adresse IP (protocole Internet).

14. Procédé selon l'une quelconque des revendications 1 à 13, dans lequel ledit système d'exploitation provisoire et/ou ledit système d'exploitation permanent sont transmis audit nouvel ordinateur en utilisant FTP (File Transfer Protocol), TFTP (Trivial File Transfer Protocol), ou un système de gestion de fichiers en réseau (Network File System) fonctionnant sous TCP / IP (Transmission Control Protocol /Internet Protocol).

15. Procédé selon l'une quelconque des revendications 1 à 14, dans lequel ladite identification unique dudit nouvel ordinateur est établie à partir d'une adresse de contrôle d'accès au support (Media Access Control) dudit nouvel ordinateur.

16. Réseau d'ordinateurs comprenant une pluralité d'ordinateurs (401, 402, 403, 404) pour configurer automatiquement un nouvel ordinateur (400) à l'intérieur dudit réseau d'ordinateurs (490),
- ledit réseau d'ordinateurs (490) comprenant un stockage en réseau (402) pour fournir un système d'exploitation provisoire audit nouvel ordinateur (400), un serveur de configuration hôte (401) pour fournir des identifications provisoires et des identifications permanentes aux ordinateurs à l'intérieur dudit réseau d'ordinateurs (490) et pour affecter lesdites identifications permanentes auxdits ordinateurs en utilisant les identificateurs uniques desdits ordinateurs,
- ledit nouvel ordinateur (400) comprend des moyens (431) pour exécuter un environnement d'exécution préalable au démarrage, demander une identification provisoire dudit nouvel ordinateur, charger un système d'exploitation provisoire à partir dudit stockage en réseau en utilisant ladite identification provisoire, et exécuter ledit système d'exploitation provisoire de telle sorte que ledit système d'exploitation provisoire
- affecte à l'intérieur dudit serveur de configuration hôte (401) une identification permanente audit nouvel ordinateur (400), et
- affecte à l'intérieur dudit serveur de configuration hôte (401) (490) ladite identification permanente audit nouvel ordinateur (400) en utilisant une identification unique dudit nouvel ordinateur (400), grâce à quoi
- ledit nouvel ordinateur (400) comprend de plus des moyens de stockage (420) pour stocker un système d'exploitation permanent chargé à partir dudit stockage en réseau (402) vers ledit nouvel ordinateur (400) après le redémarrage dudit nouvel ordinateur (400) en utilisant ladite identification permanente.

17. Produit programme d'ordinateur pour configurer automatiquement un nouvel ordinateur (400) à l'intérieur d'un réseau d'ordinateurs (490), le produit comprenant
- un module d'environnement d'exécution préalable au démarrage qui, quand il est exécuté à l'intérieur du nouvel ordinateur,
- demande une identification provisoire dudit nouvel ordinateur, et
- charge un système d'exploitation provisoire à partir d'un stockage en réseau vers ledit nouvel ordinateur (310) en utilisant ladite identification provisoire,
- un module de système d'exploitation provisoire qui, quand il est exécuté sur l'ordinateur, affecte à l'intérieur dudit réseau d'ordinateurs une identification permanente dudit nouvel ordinateur (312) et
- affecte à l'intérieur dudit réseau d'ordinateurs ladite identification permanente audit nouvel ordinateur avec une identification unique dudit nouvel ordinateur (314),
- et un module qui charge un système d'exploitation permanent à partir dudit stockage en réseau vers ledit nouvel ordinateur après le redémarrage dudit nouvel ordinateur en utilisant ladite identification permanente (326).
